# EUROPÄISCHE PATENTANMELDUNG

(11) **EP 4 201 198 A1**
(43) Veröffentlichungstag der Anmeldung: **28.06.2023**
(21) Anmeldenummer: 21216636.7
(22) Anmeldetag: 21.12.2021
(51) Int. Cl.: A01G 20/47, F04D 17/16, F04D 29/42, F04D 29/66, F04D 29/70, F04D 25/08

(54) **ELEKTRISCHES BLASGERÄT MIT EINER SCHALLABDECKUNG**

(71) Anmelder: Andreas Stihl AG & Co. KG, 71336 Waiblingen (DE)
(72) Erfinder: MANDEL, Roland, 70329 Stuttgart (DE); PIEKAREK, Sebastian, 70567 Stuttgart (DE); KÖNIG, Markus, 70771 Leinenfelden-Echterdingen (DE); HEIN, Andrea, 71139 Ehningen (DE); ZAUNER, Markus, 70736 Fellbach (DE)
(74) Vertreter: Wasmuth, Rolf

(57) **Zusammenfassung**

Die Erfindung betrifft ein elektrisches Blasgerät mit einer Gebläsespirale (10), die eine erste axiale Stirnwand (20), eine zweite axiale Stirnwand (22) und einen Blasluftauslass (11) aufweist. An der ersten axialen Stirnwand (20) ist ein Elektromotor (30) gehalten, der ein in der Gebläsespirale (10) drehendes Gebläserad (8) antreibt, welches über eine Ansaugöffnung (9) in der zweiten axialen Stirnwand (22) Umgebungsluft ansaugt. Vor der Ansaugöffnung (9) ist ein Abdeckelement (50) angeordnet, dessen Abdeckfläche (52) größer ausgebildet ist als die Lufteintrittsfläche (42) der Ansaugöffnung (9). Um bei geringem Geräusch eine große Menge Umgebungsluft anzusaugen ist vorgesehen, das Abdeckelement (50) als Abdeckscheibe (51) auszubilden, wobei zwischen dem Scheibenrand (53) und der Gebläsespirale (10) ein Ringspalt (54) ausgebildet ist, der den Zuströmkanal (80) für den unmittelbaren Zutritt von Umgebungsluft bildet.

## Beschreibung

Die Erfindung betrifft ein elektrisches Blasgerät mit einer Gebläsespirale die eine erste axiale Stirnwand, eine zweite axiale Stirnwand und einen Blasluftauslass aufweist. An der ersten axialen Stirnwand ist ein Elektromotor angeordnet, dessen Antriebswelle mit einem in der Gebläsespirale drehenden Gebläserad verbunden ist. In der zweiten axialen Stirnwand der Gebläsespirale ist eine Ansaugöffnung mit einer Lufteintrittsfläche zum Gebläserad vorgesehen. Vor der Lufteintrittsfläche der Ansaugöffnung ist ein Abdeckelement mit einer Abdeckfläche gehalten, die mit einem Abstand zur Lufteintrittsfläche liegt. Die Abdeckfläche des Abdeckelements ist größer ausgebildet als die Lufteintrittsfläche der Ansaugöffnung. Die Ansaugöffnung ist mit einem Zuströmkanal verbunden, über den der Ansaugöffnung Umgebungsluft aus der Außenumgebung des Blasgerätes zugeführt ist.

Über den Zuströmkanal zur Ansaugöffnung wird die gesamte Betriebsluft des Blasgerätes zugeführt, was zu hohen Strömungsgeschwindigkeiten am Lufteintritt des Zuströmkanals führt. Dadurch ist eine erhöhte Gefahr des Ansaugens von Fremdpartikeln gegeben, die den Lufteintritt zusetzen können.

Der Erfindung liegt die Aufgabe zugrunde ein elektrisches Blasgerät derart weiterzubilden, dass von dem Blasgerät nur eine geringe Schallemission ausgeht und zur Vermeidung des Ansaugens von Fremdpartikeln die Einströmgeschwindigkeit der Betriebsluft in den Zuströmkanal zur Gebläsespirale reduziert ist.

Die Aufgabe wird nach den Merkmalen des Anspruchs 1 gelöst.

Als Abdeckelement für die Ansaugöffnung der Gebläsespirale ist eine Abdeckscheibe vorgesehen, die einen umlaufenden, äußeren Scheibenrand aufweist. Der für die Betriebsluft notwendige Zuströmkanal zu der abgedeckten Ansaugöffnung wird durch den Ringspalt gebildet, der bei Anordnung der Abdeckscheibe vor der Ansaugöffnung zwischen dem Scheibenrand und der Gebläsespirale ausgebildet ist. Über den Ringspalt ist ein unmittelbarer Zutritt von Umgebungsluft aus der Außenumgebung des Blasgerätes in die Ansaugöffnung zum Gebläserad gewährleistet. Der Ringspalt besitzt eine große Einströmöffnung, sodass die Einströmgeschwindigkeit der benötigten Betriebsluft in den Ringspalt niedrig ist. Die Gefahr des Ansaugens von Fremdpartikeln ist reduziert.

Durch die Anordnung des Abdeckelements mit Abstand vor der Ansaugöffnung ist ein direkter Schallaustritt aus der Ansaugöffnung in die Umgebung verhindert. Das erfindungsgemäße elektrische Blasgerät hat ein leises Betriebsgeräusch.

Vorteilhaft ist zwischen der Abdeckscheibe und der Ansaugöffnung ein Dämmelement angeordnet. Das Dämmelement ist insbesondere eine Dämmmatte, durch die der Schallaustritt gesenkt und das wahrnehmbare Betriebsgeräusch des Blasgerätes weiter gesenkt ist. Zweckmäßig ist vorgesehen, die Abdeckscheibe als Träger des Dämmelementes auszubilden.

In Weiterbildung der Erfindung hat die Abdeckscheibe einen Boden mit einem gegenüber dem Boden erhöhten Scheibenrand. Die Anordnung ist zweckmäßig so getroffen, dass der Boden der Ansaugöffnung gegenüber liegt und der Scheibenrand den Ringspalt zwischen der Gebläsespirale und der Abdeckscheibe begrenzt. Insbesondere ist vorgesehen, dass der Boden mit einem größeren Abstand zur Lufteintrittsfläche der Ansaugöffnung liegt als der Scheibenrand.

Es kann zweckmäßig sein, die Abdeckscheibe gewölbt auszubilden. Vorteilhaft liegt die konkave Seite der Abdeckscheibe der Ansaugöffnung zugewandt. Die konkave Wölbung führt zu einer weiteren Reduzierung der Schallemissionen.

Die Anordnung ist so getroffen, dass die Drehachse der Antriebswelle des Elektromotors lotrecht zur Abdeckscheibe liegt, insbesondere lotrecht zum Boden der Abdeckscheibe. Insbesondere liegt die Abdeckscheibe, zweckmäßig der Boden der Abdeckscheibe parallel zur Lufteintrittsfläche der Ansaugöffnung.

Eine weitere Senkung der Schallemissionen wird erreicht, wenn die Gebläsespirale an einer Rückenplatte gehalten ist und die Abdeckscheibe unter einem Neigungswinkel zur Rückenplatte geneigt liegt. Ein derartiger Neigungswinkel der Abdeckscheibe zur Rückenplatte liegt vorteilhaft im Bereich von 3° bis 20°, insbesondere beträgt der Neigungswinkel 10°.

Das Größenverhältnis des Abdeckelementes, insbesondere der Abdeckscheibe zur Ansaugöffnung ist derart gewählt, dass der auf Höhe des Scheibenrandes gemessene Maximaldurchmesser S der Abdeckscheibe das 1,5fache bis 3,5fache, insbesondere das 2,6fache des Durchmessers D der Ansaugöffnung beträgt.

Der zwischen dem Scheibenrand und der Gebläsespirale ausgebildete Ringspalt erstreckt sich über einen Umfangswinkel von bis zu 360°. Die Betriebsluft aus der Außenumgebung des Blasgerätes kann über den Umfangswinkel des Ringspaltes ungestört in den Ringspalt einströmen, da die Einströmöffnung des Ringspaltes sich über den Umfangswinkel des Ringspaltes selbst erstreckt. Die Ausbildung ist so getroffen, dass sich der durch den Ringspalt gebildete Zuströmkanal über zumindest 60 % bis 90 % des Umfangswinkels W der Abdeckscheibe erstreckt. Die Abdeckscheibe wird über Befestigungselemente an der Gebläsespirale gehalten, wodurch der Ringspalt unterbrochen ist. Diese Störung oder Unterbrechung des Ringspaltes durch ein Befestigungselement hat jedoch keine signifikanten Auswirkungen, da sie sich das Befestigungselement in Umfangsrichtung über nur wenige Winkelgrade des Umfangswinkels erstreckt. Ein Befestigungselement erstreckt sich vorteilhaft über nur 3° bis 10° des Umfangswinkels, insbesondere über genau 8° des Umfangswinkels. Zweckmäßig ist in einem Befestigungselement eine Aussparung vorgesehen, über die Umgebungsluft in den Ringspalt eintreten kann.

Weitere Merkmale der Erfindung ergeben sich aus den weiteren Ansprüchen, der Beschreibung und der Zeichnung, in der ein Ausführungsbeispiel der Erfindung dargestellt ist, welches nachfolgend beschrieben wird. Die in den Ansprüchen, der Beschreibung und der Zeichnung angegebenen Merkmale sind untereinander beliebig kombinierbar. In der Zeichnung zeigt:
- Fig. 1: ein Blasgerät mit einer erfindungsgemäßen Schallabdeckung in einer perspektivischen Ansicht von hinten,
- Fig. 2: in schematischer Darstellung einen axialen Schnitt durch das Blasgerät nach Figur 1,
- Fig. 3: einen axialen Schnitt durch den Antriebsmotor und die Gebläsespirale des Blasgerätes nach Fig. 1,
- Fig. 4: eine Ansicht auf das Blasgerät nach Fig. 1 von hinten,
- Fig. 5: eine Ansicht der Gebläsespirale mit einem Abdeckelement als Schallabdeckung der Ansaugöffnung,
- Fig. 6: eine perspektivische Ansicht der Gebläsespirale nach Figur 5,
- Fig. 7: eine weitere perspektivische Ansicht der Gebläsespirale nach Fig. 5.

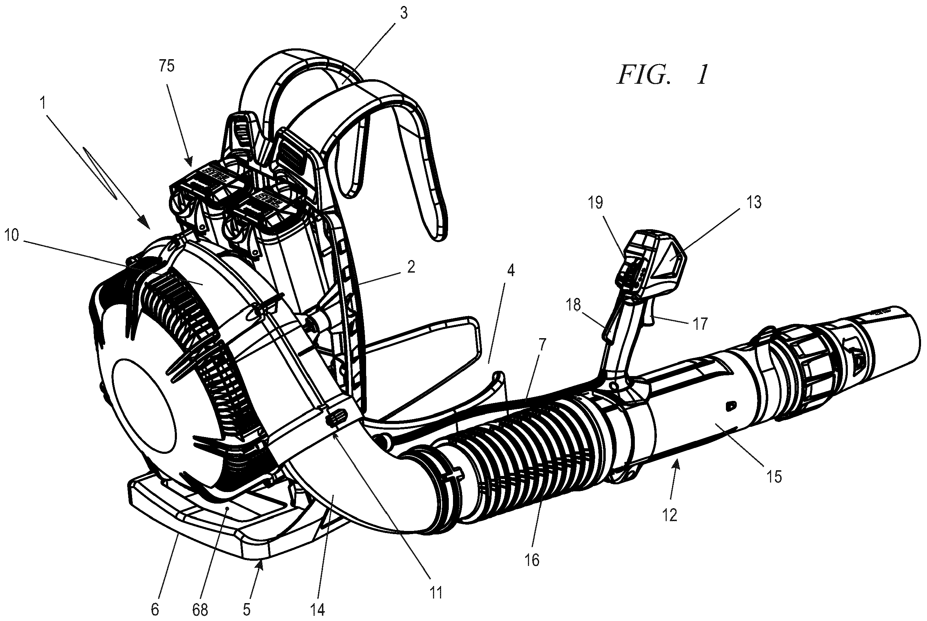

Das in Fig. 1 dargestellte Ausführungsbeispiel eines Blasgerätes 1 ist ein rückengetragenes Blasgerät. Auch andere Ausgestaltungen des Blasgerätes wie ein handgetragenes Blasgerät, ein fahrbares Blasgerät oder dergleichen können mit dem Gegenstand der Erfindung ausgerüstet werden.

Das rückengetragene Blasgerät 1 umfasst eine Rückenplatte 2, die mittels schematisch dargestellten Schultergurten 3 und einem schematisch dargestellten Beckengurt 4 auf dem Rücken eines Benutzers festgelegt wird. Die Rückenplatte 2 ist Teil einer Trage 5, die mit einer Standplatte 6 versehen ist. Die Rückenplatte 2 und die Standplatte 6 bilden die in Seitenansicht L-förmige ausgebildete Trage 5. Die Standplatte 6 weist vorteilhaft eine zentrale Öffnung 68 auf. Über die Öffnung 68 kann von unterhalb des Blasgerätes 1 Umgebungsluft angesaugt werden. Zweckmäßig kann die Standplatte 6 als Bügel ausgebildet sein, insbesondere als U-förmiger Bügel ausgebildet sein. Die Enden des Bügels sind an der Rückenplatte 2 festgelegt. Der Bügel besteht vorteilhaft aus einem metallischen Werkstoff oder einer Metalllegierung.

An der Rückenplatte 2 ist eine Gebläsespirale 10 gehalten, die einen Auslass 11 zum Anschluss eines Blasrohrs 12 aufweist. Auf dem Blasrohr 12 ist ein Handgriff 13 zum Halten und Führen des Blasrohrs 12 festgelegt. Das Blasrohr 12 weist einen hinteren starren Rohrabschnitt 14 zum Anschluss an den Auslass 11 der Gebläsespirale 10 auf. Der Rohrabschnitt 14 ist zweckmäßig in dem Auslass 11 drehbar gehalten. An den hinteren Rohrabschnitt 14 ist ein flexibler Rohrabschnitt 16 angeschlossen, der mit einem vorderen starren Rohrabschnitt 15 verbunden ist. Der Handgriff 13 ist auf dem vorderen Rohrabschnitt 15 festgelegt. Der vordere Rohrabschnitt 15 ist relativ zum hinteren Rohrabschnitt 14 in alle Raumrichtungen verschwenkbar.

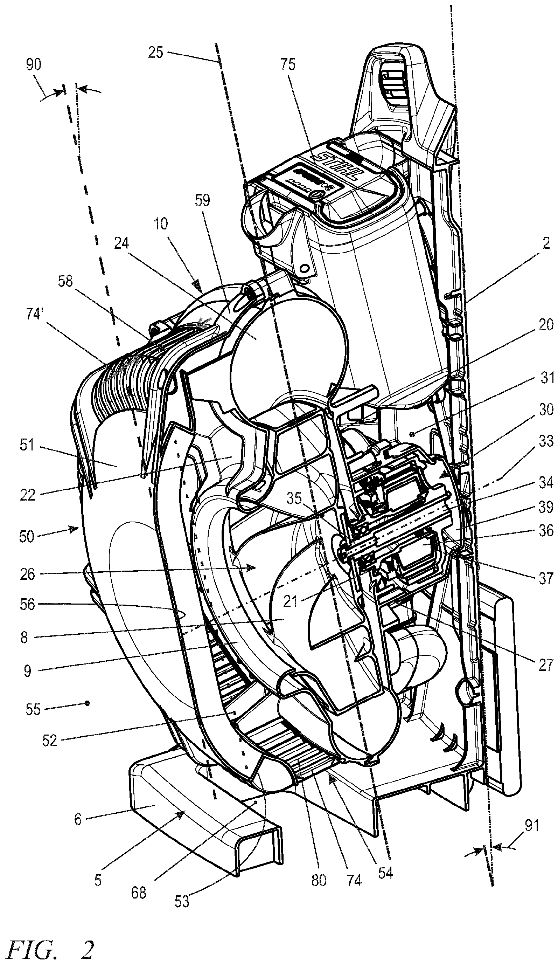

Im Handgriff 13 sind Bedienelemente vorgesehen, so zum Beispiel ein Schalthebel 17 (z. B. in der Funktion eines ,Gashebels'), eine Schalthebelsperre 18 oder weitere geeignete Bedienelemente 19. Die Bedienelemente sind über eine Verbindungsleitung 7 mit einer Steuerungselektronik 40 zur Bedienung eines Elektromotors 30 (Fig. 2) verbunden. Die zum Betrieb des Elektromotors 30 notwendige Energie wird durch einen Akkupack 75 bereitgestellt. Der Akkupack 75 ist in einem Bauraum 31 zwischen der Gebläsespirale 10 und der Rückenplatte 2 gehalten. Im gezeigten Ausführungsbeispiel sind zwei Akkupacks nebeneinander vorgesehen.

Wie Fig. 2 zeigt, weist die Gebläsespirale 10 einen Spiralkanal 24 auf, der in den Auslass 11 mündet. Im Zentrum 26 des Spiralkanals 24 dreht das Gebläserad 8, wobei das Zentrum 26 von einer ersten axialen Stirnwand 20 und einer zweiten axialen Stirnwand 22 begrenzt ist. Zwischen den axialen Stirnwänden 20, 22 ist das Gebläserad 8 angeordnet. Die erste axiale Stirnwand 20 liegt der Rückenplatte 2 mit Abstand gegenüber, wodurch der Bauraum 31 gebildet ist, der neben der Aufnahme von Akkupacks 75 der Aufnahme eines Antriebs dient. Die zweite axiale Stirnwand 22 liegt auf der der Rückenplatte 2 abgewandten Seite der Gebläsespirale 10.

Im gezeigten Ausführungsbeispiel ist das Gebläserad 8 von dem Elektromotor 30 angetrieben, der in dem Bauraum 31 an der ersten axialen Stirnwand 20 der Gebläsespirale 10 gehalten ist. Die Antriebswelle 34 des Elektromotors 30 ragt durch eine Wellenöffnung 21 in der ersten axialen Stirnwand 20 der Gebläsespirale 10 in das Zentrum 26 der Gebläsespirale 10 ein. Der einragende Endabschnitt 35 der Antriebswelle 34 ist drehfest mit dem Gebläserad 8 verbunden.

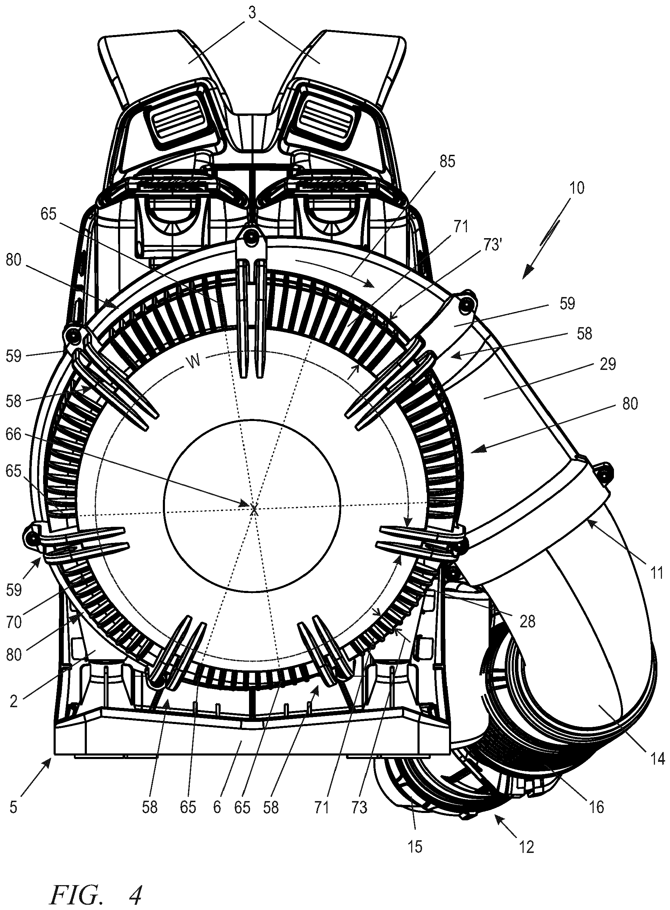

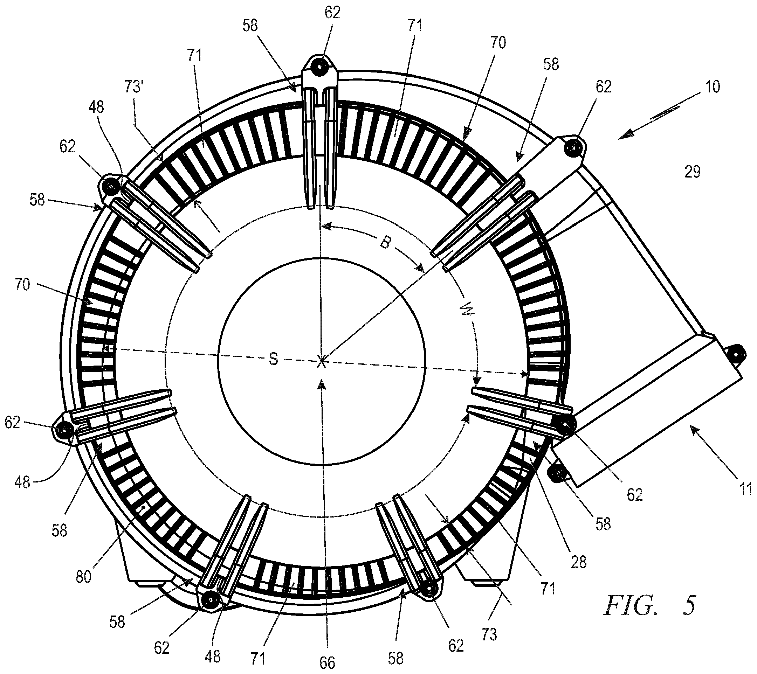

In der zweiten axialen Stirnwand 22 ist eine Ansaugöffnung 9 ausgebildet, über die axial Umgebungsluft in das Gebläserad 8 angesaugt und radial in den Spiralkanal 24 gefördert wird. Der Spiralkanal 24 erweitert sich von einem ersten Ende 28 zu seinem zweiten Ende 29 (Fig. 4, 5). Das zweite Ende 29 bildet den Auslass 11 des Spiralkanals 24. Die von dem Gebläserad 8 axial durch die Ansaugöffnung 9 angesaugte Betriebsluft wird aus der Außenumgebung 55 des Blasgerätes 1 angesaugt und über den Spiralkanal 24 dem Auslass 11 und dem Blasrohr 12 zugeführt.

Der Elektromotor 30 ist ein sogenannter Außenläufer, d. h., der Stator 36 liegt innerhalb des Rotors 37. Die mit dem Rotor 37 verbundene Antriebswelle 34 durchragt den Stator 36. Die Antriebswelle 34 ist in einer zentralen Hülse eines Tragflansches des Elektromotors 30 gelagert und vorzugsweise axial gesichert gehalten.

Der Elektromotor 30 kann in einem Motorgehäuse 39 aufgenommen sein, welches auf einer ringförmigen Gehäusehalterung 27 der axialen Stirnwand 20 festgelegt, insbesondere aufgesteckt ist. Die Steckverbindung zwischen dem Motorgehäuse 39 und der Gehäusehalterung 27 kann eine formschlüssige Gehäusesicherung umfassen. Das Motorgehäuse 39 ist vorteilhaft stirnseitig offen und ist insbesondere von der axialen Stirnwand 20 der Gebläsespirale 10 verschlossen.

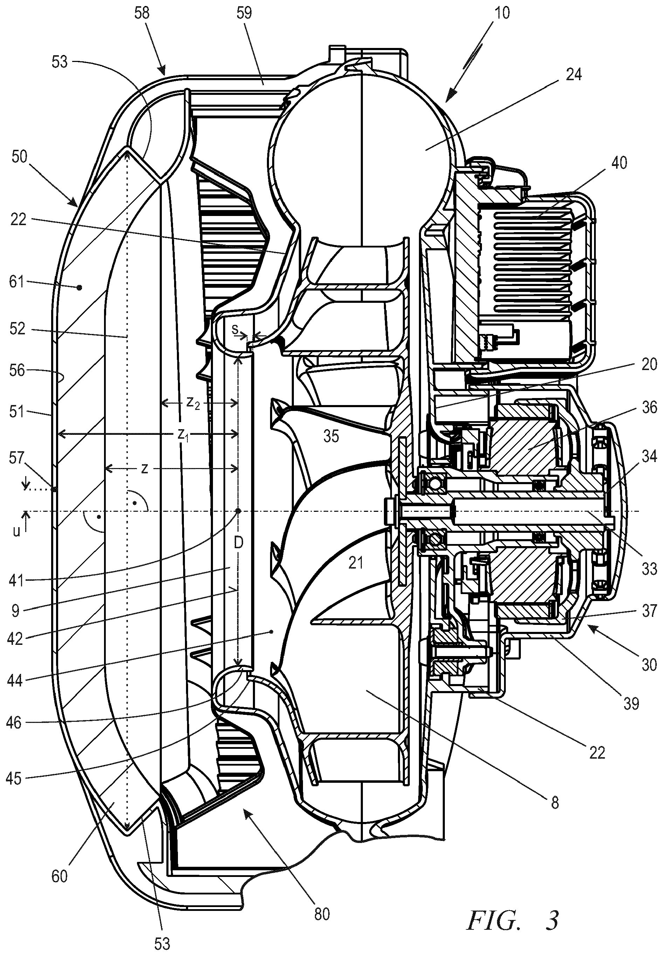

Die Ansaugöffnung 9 weist eine Lufteintrittsfläche 42 (Fig. 3) auf. Die Ansaugöffnung 9 ist der Lufteintrittsöffnung 44 des Gebläserades 8 angepasst ausgebildet. Im gezeigten Ausführungsbeispiel ist - wie in den Fig. 2 und 3 gezeigt - die Ansaugöffnung 9 mit einem zum Gebläserad 8 umgebogenen Kragen 46 versehen, der in die Lufteintrittsöffnung 44 des Gebläserades 8 einragt. Vorzugsweise überdecken sich der Kragen 46 und der Umfangsrand 45 der Lufteintrittsöffnung 44. Durch die Überdeckung s (Fig. 3) ist eine Art Spaltdichtung gebildet, die einen Strömungskurzschluss zwischen dem Spiralkanal 24 und der Ansaugöffnung 9 verhindert.

Die Anordnung ist so getroffen, dass die Drehachse 33 der Antriebswelle 34 senkrecht zu der Lufteintrittsfläche 42 liegt. Insbesondere steht die Drehachse 33 der Antriebswelle 34 lotrecht auf der Lufteintrittsfläche 42. Die Drehachse 33 der Antriebswelle 34 schneidet die Lufteintrittsfläche 42 im Mittelpunkt 41 der Ansaugöffnung 9.

Vor der Ansaugöffnung 9 der Gebläsespirale 10 ist ein Abdeckelement 50 angeordnet, dass im gezeigten Ausführungsbeispiel als Abdeckscheibe 51 gestaltet ist. Die Abdeckfläche 52 des Abdeckelementes 50 bzw. der Abdeckscheibe 51 ist größer ausgebildet als die Lufteintrittsfläche 42 der Ansaugöffnung 9. Die Abdeckscheibe 51 liegt mit einem Abstand z zur Lufteintrittsfläche 42 der Ansaugöffnung 9. Die Abdeckscheibe 51 weist einen äußeren Scheibenrand 53 auf. Zwischen dem Scheibenrand 53 der Abdeckscheibe 51 und der Gebläsespirale 10, insbesondere dem Spiralkanal 24 der Gebläsespirale 10, ist ein Spalt, insbesondere ein Ringspalt 54 ausgebildet. Der Ringspalt 54 bildet einen Zuströmkanal 80 für die Betriebsluft des Blasgerätes 1. Über den Ringspalt 54 ist ein unmittelbarer Zutritt von Umgebungsluft aus der Außenumgebung 55 des Blasgerätes 1 zur Ansaugöffnung 9 der Gebläsespirale 10 gegeben.

Wie insbesondere die Fig. 4 bis 7 zeigen, hat der Ringspalt 54 eine in Umfangsrichtung der Ansaugöffnung 9 sich ändernde Größe. Der Ringspalt 54 ist zwischen der Gebläsespirale 10 bzw. zwischen dem Scheibenrand 53 und dem Spiralkanal 24 ausgebildet. Wie die Figuren des Ausführungsbeispiels zeigen, erstreckt sich der Spiralkanal über etwa 360°, wobei das vom Auslass 11 entfernt liegende Ende 28 des Spiralkanals 24 einen kleineren Kanalquerschnitt aufweist als das in den Auslass 11 mündende andere Ende 29 des Spiralkanals 24. Das in den Auslass 11 mündende andere Ende 29 des Spiralkanals 24 hat einen mehrfach größeren Kanalquerschnitt als das vom Auslass 11 entfernt liegende Ende 28 des Spiralkanals 24. Bevorzugt ist der Kanalquerschnitt des am Auslass 11 liegenden Endes 29 des Spiralkanals 24 zumindest 1,2-mal bis 3-mal größer als der Kanalquerschnitt des Endes 28.

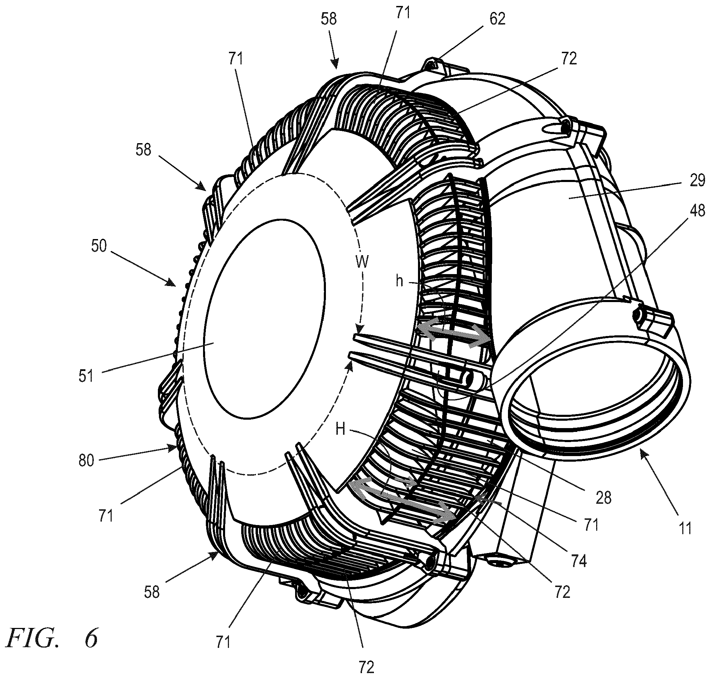

Wie insbesondere Fig. 6 zeigt, liegt das in Strömungsrichtung 85 des Spiralkanals 24 vom Auslass 11 entfernt liegende Ende 28 des Spiralkanals 24 konstruktiv um einen Drehwinkel von ca. 320° bis 360° zum Ende 29 entfernt. Der ausgebildete Ringspalt 54 zwischen dem Scheibenrand 53 der Abdeckscheibe 51 und der Gebläsespirale 10 ist im Bereich des Endes 28 des Spiralkanals 24 größer als im Bereich des in den Auslass 11 mündenden Endes 29. Im Bereich des Endes 28 hat der Ringspalt 54 eine Höhe H (Fig. 6), die größer ist als die Höhe h im Bereich des in den Auslass 11 mündenden Endes 29 des Spiralkanals 24.

Zweckmäßig ist die Abdeckscheibe 51 derart angeordnet, dass ihr Mittelpunkt 57 um einen Abstand u höher liegt als der Mittelpunkt 41 der Ansaugöffnung 9 bzw. der Lufteintrittsfläche 42. Wie Fig. 3 zeigt, liegt der Mittelpunkt 57 der Abdeckscheibe 51 um einen Abstand u höher als die Drehachse 33 der Antriebswelle 34 des Elektromotors 30.

Die Abdeckscheibe 51 ist insbesondere derart ausgebildet, dass ihr Boden 56 mit einem größeren Abstand z₁ zur Ansaugöffnung 9 bzw. deren Lufteintrittsfläche 42 liegt als der Scheibenrand 53, der mit einem Abstand z₂ zur Ansaugöffnung 9 bzw. deren Lufteintrittsfläche 42 liegt. Bevorzugt ist die Abdeckscheibe 51 mit einem erhöhten Scheibenrand 53 ausgebildet. In einfacher Weise ist die Ausbildung derart getroffen, dass die Abdeckscheibe 51 gewölbt ausgebildet ist, wobei die konkave Seite der Wölbung der Ansaugöffnung 9 zugewandt liegt.

In bevorzugter Ausgestaltung ist vorgesehen, auf der Innenseite der Abdeckscheibe 51 ein akustisches Dämmelement 60 anzuordnen. Zweckmäßig ist der Scheibenrand 53 derart gestaltet, dass das Dämmelement 60 durch den Scheibenrand 53 an der Abdeckscheibe 51 gehalten ist, ohne dass zusätzliche Befestigungsmittel notwendig sind. Die Abdeckscheibe 51 bildet einen Träger des Dämmelementes 60. Im gezeigten Ausführungsbeispiel verengt der Scheibenrand 53 die konkav gewölbte Innenseite der Abdeckscheibe 51, sodass das Dämmelement 60 durch den Scheibenrand 53 sicher auf der Innenseite der Abdeckscheibe 51 gehalten ist. Das Dämmelement 60 besteht vorteilhaft aus einer Dämmmatte 61, insbesondere einer einteiligen Dämmmatte, und ist an der Abdeckscheibe 51 fixiert gehalten.

Durch die Abdeckscheibe 51 und insbesondere dem auf der Abdeckscheibe 51 angeordneten Dämmelement 60 wird der Schallaustritt aus der Ansaugöffnung 9 in die Umgebung reduziert. In besonderer Weiterbildung der Erfindung ist vorgesehen, die Abdeckscheibe 51 nicht parallel zur Rückenplatte 2 anzuordnen, sondern unter einem Neigungswinkel 90 geneigt zur Rückenplatte 2 vorzusehen. Der Neigungswinkel 90 liegt insbesondere zwischen 3° bis 20°. In einer vorteilhaften Ausführungsform beträgt der Neigungswinkel 10°.

Wie Fig. 2 zeigt, ist die Anordnung bevorzugt so getroffen, dass die an der Rückenplatte 2 gehaltene Gebläsespirale 10 derart angeordnet ist, dass eine Ebene 25 durch die Gebläsespirale 10 mit einem Neigungswinkel 91 zwischen 3° bis 20° zur Rückenplatte 2 liegt. Bevorzugt ist der Neigungswinkel 91 der Gebläsespirale 10 und der Neigungswinkel 90 der Abdeckscheibe 5 1 zur Rückenplatte 2 gleich ausgebildet. Bei gleichen Neigungswinkel 90 und 91 liegt die Drehachse 33 der Antriebswelle 34 des Elektromotors 30 lotrecht zur Abdeckscheibe 51, insbesondere zum Boden 56 der Abdeckscheibe 51.

Mit der geneigten Anordnung unter einem Neigungswinkel 90 bzw. 91 wird erreicht, dass aus dem Ringspalt 54 austretender Schall eine Richtung aufweist, die vom Kopf eines das Blasgerät auf dem Rücken tragenden Benutzers weg führt. Für den das Blasgerät auf dem Rücken tragenden Benutzer ist das Blasgerät subjektiv leiser als wenn der Neigungswinkel 90 bzw. 91 zu 0° gewählt ist.

Die Abdeckscheibe 51 weist insbesondere einteilig angebundene Befestigungselemente 58 auf, wobei ein Befestigungselement 58 bevorzugt als Befestigungsfuß 59 ausgebildet ist. Zweckmäßig ist in einem Befestigungselement 58 eine Aussparung 48 vorgesehen, durch die Umgebungsluft in den Ringspalt 54 eintreten kann. Die wirksame Einströmfläche des Ringspaltes 54 wird nur wenig gestört.

Wie Fig. 5 zeigt, sind über den Umfang der Abdeckscheibe 51 mehrere Befestigungselemente 58 vorgesehen, die insbesondere mit gleichen Winkelabständen B zueinander liegen. Die Winkelabstände B liegen in einem Bereich zwischen 45° und 60°. Im gezeigten Ausführungsbeispiel sind über den Umfang der Abdeckscheibe 51 sieben Befestigungselemente 58 vorgesehen. Zweckmäßig ist in jedem Befestigungselement 58 eine Aussparung 48 als Einströmöffnung für Umgebungsluft in den Ringspalt 54 ausgebildet.

Wie insbesondere Fig. 3 zeigt, überbrückt ein als Befestigungsfuß 59 ausgebildetes Befestigungselement 58 den Abstand zwischen der Abdeckscheibe 51 und der Gebläsespirale 10. Jedes Befestigungselement 58 ist mit seinem freien Endabschnitt an der Gebläsespirale 10 festgelegt, insbesondere mit einer Befestigungsschraube 62 fixiert.

Nach einer Weiterbildung der Erfindung ist der Ringspalt 54 zwischen dem Scheibenrand 53 und der Gebläsespirale 10 mit einem Schutzgitter 70 versehen. Das Schutzgitter 70 besteht aus einer Vielzahl von Rippen 65, die in Umfangsrichtung des Scheibenrandes 53 mit Abstand zueinander angeordnet sind. Die Abstände zwischen den Rippen 65 sind vorzugsweise gleich ausgebildet. Die Rippen 65 sind insbesondere radial zu einem Zentrum 66 des Abdeckelementes 50 ausgerichtet (Fig. 4). Das Schutzgitter 70 besteht im Wesentlichen aus einem in Verlängerung der Abdeckscheibe 51 sich erstreckenden radialen Abdeckabschnitt 71 und einen in Richtung der Drehachse 33 sich erstreckenden axialen Abdeckabschnitt 72. Der axialen Abdeckabschnitt 72 überbrückt den Abstand der Abdeckscheibe 51 zur Gebläsespirale 10. Wie der Ansicht nach Fig. 5 zu entnehmen, können die radialen Abdeckabschnitte 71 eine unterschiedliche radiale Erstreckung 73 aufweisen. So ist ein dem Auslass 11 der Gebläsespirale 10 benachbarter radialer Abdeckabschnitt 71 in seiner Erstreckung 73 kürzer ausgebildet als die Erstreckung 73' ein dem Zentrum der Abdeckscheibe 51 gegenüberliegender anderer Abdeckabschnitt 71. Es kann zweckmäßig sein, wenn sich die Rippen 65 auch über den dem Scheibenrand 53 benachbarten Plattenabschnitt des Abdeckelementes 50 erstrecken.

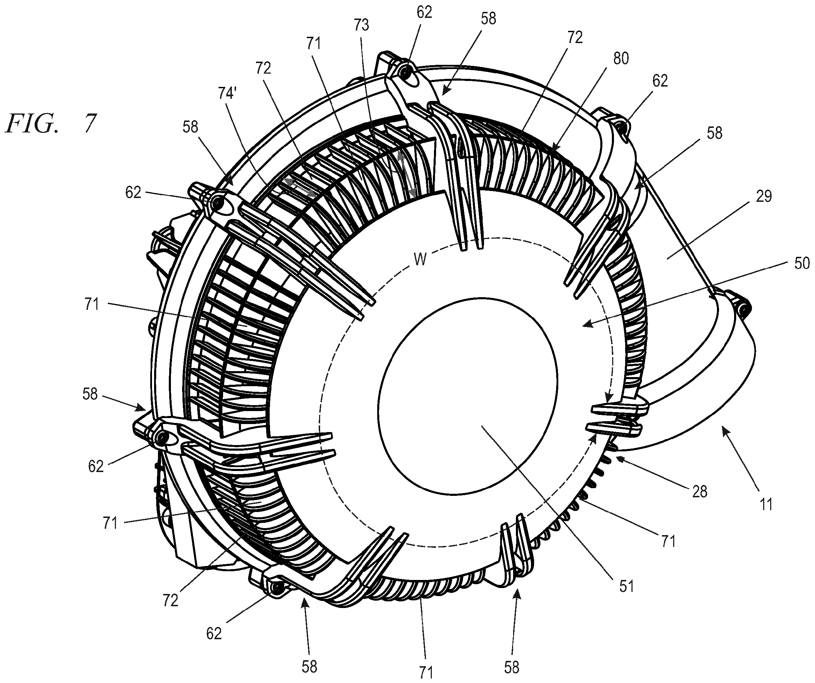

Die axiale Erstreckung 74 eines axialen Abdeckabschnitts 72 ist - wie Fig.6 zeigt - über den Umfang der Abdeckscheibe 51 unterschiedlich groß ausgebildet. So ist die axiale Erstreckung 74 im Bereich unterhalb des Auslasses 11 größer als die axiale Erstreckung 74' eines dem Zentrum der Abdeckscheibe 51 gegenüberliegenden axialen Abdeckabschnitts 72, wie Fig. 7 zeigt.

Das aus den Abdeckabschnitten 71 und 72 zusammengesetzte Schutzgitter 70 und die Befestigungselemente 58 des Abdeckelementes 50 sind zusammen mit der Abdeckscheibe 51 einteilig ausgebildet. Das Abdeckelement 50 ist insbesondere ein einteiliges Spritzgussteil, welches auf der Gebläsespirale 10 durch die Befestigungselemente 58 festgelegt ist. Der durch das Schutzgitter 70 geschützte Ringspalt 54 bildet einen Zuströmkanal 80, über den die Ansaugöffnung 9 in der axialen Stirnwand 22 der Gebläsespirale 10 unmittelbar mit der Umgebungsluft der Außenumgebung 55 des Blasgerätes 1 verbunden ist. Der Zuströmkanal 80 erstreckt sich im Wesentlichen über den gesamten Umfang der Abdeckscheibe 51 mit einem Umfangswinkel von bis zu 360°. Der Zuströmkanal 80 ist in Umfangsrichtung durch die Befestigungsfüße 59 mehrfach unterbrochen. Der Eintrittsquerschnitt des Zuströmkanals 80 ist jeweils durch einen Befestigungsfuß 59 in einem nur kleinen Umfangswinkel von 3° bis 10°, insbesondere 6° gestört. Bei der gezeigten Anzahl von sieben Befestigungselementen 58 ist der Zuströmkanal 80 über einen gesamten Umfangswinkel von ca. 20° bis 70°, insbesondere 40° unterbrochen. Im gezeigten Ausführungsbeispiel erstreckt sich der Zuströmkanal 80 über einen Umfangswinkel W von 280° bis 340°, insbesondere über 318°.

## Patentansprüche

1. Elektrisches Blasgerät mit einer Gebläsespirale (10), die eine erste axiale Stirnwand (20), eine zweite axiale Stirnwand (22) und einen Blasluftauslass (11) aufweist, mit einem an der ersten axialen Stirnwand (20) angeordneten Elektromotor (30) mit einer Antriebswelle (34), die mit einem in der Gebläsespirale (10) drehenden Gebläserad (8) verbunden ist, und mit einer in der zweiten axialen Stirnwand (22) der Gebläsespirale (10) vorgesehenen Ansaugöffnung (9) mit einer Lufteintrittsfläche (42) sowie mit einem vor der Lufteintrittsfläche (42) der Ansaugöffnung (9) angeordneten Abdeckelement (50) mit einer Abdeckfläche (52), die mit einem Abstand (z) zur Lufteintrittsfläche (42) der Ansaugöffnung (9) liegt, wobei die Abdeckfläche (52) des Abdeckelementes (50) größer ausgebildet ist als die Lufteintrittsfläche (42) der Ansaugöffnung (9), und die Ansaugöffnung (9) mit einem Umgebungsluft aus der Außenumgebung (55) des Blasgerätes (1) zuführenden Zuströmkanal (80) verbunden ist,
**dadurch gekennzeichnet, dass** das Abdeckelement (50) als Abdeckscheibe (51) mit einem umlaufenden, äußeren Scheibenrand (53) ausgebildet ist, dass zwischen dem Scheibenrand (53) und der Gebläsespirale (10) ein Ringspalt (54) ausgebildet ist, und dass der Ringspalt (54) den Zuströmkanal (80) für den unmittelbaren Zutritt von Umgebungsluft aus der Außenumgebung (55) des Blasgerätes (10) in die Ansaugöffnung (9) bildet.

2. Blasgerät nach Anspruch 1,
**dadurch gekennzeichnet, dass** zwischen der Abdeckscheibe (51) und der Ansaugöffnung (9) ein Dämmelement (60) angeordnet ist.

3. Blasgerät nach Anspruch 2,
**dadurch gekennzeichnet, dass** die Abdeckscheibe (51) als Träger des Dämmelementes (60) ausgebildet ist.

4. Blasgerät nach einem der Ansprüche 1 bis 3,
**dadurch gekennzeichnet, dass** die Abdeckscheibe (51) einen Boden (56) mit einem gegenüber dem Boden (56) erhöhten Scheibenrand (53) aufweist.

5. Blasgerät nach Anspruch 4,
**dadurch gekennzeichnet, dass** der Boden (56) mit einem größeren Abstand (z₁) zur Lufteintrittsfläche (42) der Ansaugöffnung (9) liegt als der Scheibenrand (53).

6. Blasgerät nach einem der Ansprüche 1 bis 5,
**dadurch gekennzeichnet, dass** die Abdeckscheibe (51) gewölbt ausgebildet ist.

7. Blasgerät nach Anspruch 6,
**dadurch gekennzeichnet, dass** die konkave Seite der Abdeckscheibe (51) der Ansaugöffnung (9) zugewandt liegt.

8. Blasgerät nach einem der Ansprüche 1 bis 7,
**dadurch gekennzeichnet, dass** die Drehachse (33) der Antriebswelle (34) des Elektromotors (30) lotrecht zum Boden (56) der Abdeckscheibe (51) liegt.

9. Blasgerät nach einem der Ansprüche 1 bis 8,
**dadurch gekennzeichnet, dass** die Gebläsespirale (10) an einer Rückenplatte (2) gehalten ist und die Abdeckscheibe (51) unter einem Neigungswinkel (90) zur Rückenplatte (2) geneigt liegt.

10. Blasgerät nach Anspruch 9,
**dadurch gekennzeichnet, dass** der Neigungswinkel (90) in einem Bereich zwischen 3° bis 20° liegt, insbesondere 10° beträgt.

11. Blasgerät nach einem der Ansprüche 1 bis 10,
**dadurch gekennzeichnet, dass** der auf Höhe des Scheibenrandes (53) gemessene Maximaldurchmesser (S) der Abdeckscheibe (51) das 1,5-fache bis 3,5-fache des Durchmessers (D) der Ansaugöffnung (9) beträgt.

12. Blasgerät nach einem der Ansprüche 1 bis 11,
**dadurch gekennzeichnet, dass** der auf Höhe des Scheibenrandes (53) gemessene Maximaldurchmesser (S) der Abdeckscheibe (51) das 2,6-fache des Durchmessers (D) der Ansaugöffnung (9) beträgt.

13. Blasgerät nach einem der Ansprüche 1 bis 12,
**dadurch gekennzeichnet, dass** sich der Ringspalt (54) über einen Umfangswinkel (W) von bis zu 360° erstreckt und sich der Zuströmkanal (80) über zumindest 60% bis 90% des Umfangswinkels (W) erstreckt.
